# EUROPÄISCHE PATENTSCHRIFT

(11) **EP 1 018 282 B1**
(45) Veröffentlichungstag und Bekanntmachung des Hinweises auf die Patenterteilung: **14.06.2006**
(21) Anmeldenummer: 98951188.6
(22) Anmeldetag: 21.08.1998
(51) Int. Cl.: H04Q 7/38, H04B 7/26, H04L 1/00

(54) **OPTIMIERTE NACHBARKANALSUCHE UND TIMESLOTZUWEISUNG FÜR MEHRFACHZEITSCHLITZ-MOBILSTATIONEN**
OPTIMISED OPERATIONS FOR RESEARCH IN ADJACENT CHANNELS AND FOR ALLOCATING OPTIMISED TIME SLOTS FOR MOBILE STATIONS TRANSMITTING IN A PLURALITY OF TIME SLOTS
OPERATIONS OPTIMISEES DE RECHERCHE SUR DES CANAUX VOISINS ET D'ATTRIBUTION DE TRANCHES DE TEMPS OPTIMISEES POUR STATIONS MOBILES TRANSMETTANT DANS PLUSIEURS TRANCHES DE TEMPS

(30) Priorität: 25.09.1997 DE 19742388
(43) Veröffentlichungstag der Anmeldung: 12.07.2000
(73) Patentinhaber: SIEMENS AKTIENGESELLSCHAFT, 80333 München (DE)
(72) Erfinder: RAAF, Bernhard, D-81475 München (DE)
(86) Internationale Anmeldenummer: PCT/DE1998/002452
(87) Internationale Veröffentlichungsnummer: WO 1999/016275

(56) Entgegenhaltungen:
- EP-A- 0 192 809
- EP-A- 0 540 808
- WO-A-96/01534
- WO-A-97/11542
- WO-A-97/15156
- DE-A- 19 547 018
- US-A- 5 177 740

## Beschreibung

Die vorliegende Erfindung betrifft ein Verfahren zur Übertragung von Datenpaketen zwischen zumindest einer Basisstation und zumindest einer Mobilstation eines Mobilfunksystems gemäß dem Oberbegriff des Anspruches 1 und ein System zur Übertragung von Datenpaketen zwischen zumindest einer Basisstation und zumindest einer Mobilstation eines Mobilfunksystems gemäß dem Oberbegriff des Anspruches 10.

Ein derartiges Verfahren und ein derartiges System zur Übertragung von Datenpaketen zwischen zumindest einer Basisstation und zumindest einer Mobilstation eines Mobilfunksystems sind aus dem Stand der Technik bekannt. Während eines Gesprächs, d.h. im verbundenen Zustand, muss eine Mobilstation eines Mobilfunksystems, während sie mit einer aktuellen Basisstation in Verbindung steht, regelmäßig auf vorgegebenen Frequenzen nach Datenpaketen von benachbarten Basisstationen suchen und deren Identität erkennen. Die Erkennung der Identität erfolgt in der Regel über die Dekodierung des sogen. BSIC (Basisstation-Identitätscode) im Synchronisationsdatenpaket. Dazu sendet jede Basisstation regelmäßig Synchronisationsdatenpakete aus. Im GSM-Standard senden die Basisstationen alle 10 bis 11 Zeitrahmen ein Synchronisationsdatenpaket mit der Dauer von einem Zeitschlitz aus, wobei acht Zeitschlitze einen Zeitrahmen bilden.

Im GSM-Standard kann eine Mobilstation im Gesprächszustand alle 26 Rahmen für die Dauer von etwas mehr als einem Zeitrahmen einen Nachbarkanal beobachten. Dieser eine vorgegebene Zeitrahmen ist der sogen. Idle-Rahmen, in dem die Mobilstation keine Daten mit der aktuellen Basisstation austauscht. Der vorgegebene Zeitrahmen wird dazu verwendet, Nachbarkanäle zu beobachten und ggfs. Synchronisationsdatenpakete benachbarter Basisstationen zu finden und zu dekodieren. Die Basisstationen senden im GSM-Standard innerhalb jeweils eines aus 51 Zeitrahmen bestehenden Multirahmens fünf Synchronisationsdatenpakete von der Dauer eines Zeitschlitzes aus. Diese Synchronisationsdatenpakete werden viermal alle 10 und dann einmal nach 11 Rahmen von den Basisstationen ausgesendet. Da die Mobilstation alle 26 Zeitrahmen jeweils einen vorgegebenen Zeitrahmen zur Beobachtung der Nachbarkanäle zur Verfügung hat, kann eine Mobilstation unabhängig vom relativen Timing der Synchronisationsdatenpakete der Basisstationen nach spätestens 11 Leer-Zeitrahmen ein Synchronisationsdatenpaket einer benachbarten Basisstation empfangen.

Standard-Mobilstationen im GSM-System benutzen nur einen von acht möglichen Zeitschlitzen pro Zeitrahmen zum Austausch von Daten mit einer jeweiligen Basisstation. Um höhere Datenraten erzielen zu können, wurden Mehrfachzeitschlitz-Mobilstationen definiert (GSM-Bezeichnung ist HSDSC), die im Extremfall auf bis zu allen acht Zeitschlitzen Daten empfangen und/oder senden können. Die vorliegende Erfindung bezieht sich insbesondere auf derartige Mehrfachzeitschlitz-Mobilstationen.

Dokument US 5,177,740 offenbart ein Verfahren und eine Vorrichtung zur Synchronisation von Zeitrahmen/Zeitschlitzen innerhalb eines auf Zeitmultiplexverfahren basierenden Mobilfunksystems. Hierbei wird eine Korrelation durchgeführt zwischen einer Referenz-Sequenz von Symbolen und einer empfangenen Sequenz von Symbolen, welche Teil eines bestimmten Zeitschlitzes sind. In Abhängigkeit von der Korrelation wird eine Startposition für die Zeitrahmen/Zeitschlitze festgelegt und im weiteren Verfahren mehrmals überprüft.

In Dokument EP 0 192 809 B1 ist ein Verfahren beschrieben zum Normieren der in einer Feststation eines Mobilfunksystems empfangenen Signalkanäle, die von mobilen Teilnehmern ausgesendet worden sind und unterschiedliche Signallaufzeiten aufweisen, auf einen vorgegebenen, in mehrere Kanalzeitschlitze unterteilten Zeitmultiplex-Empfangsrahmen. Hierfür werden die unterschiedlichen Laufzeiten der Signalkanäle ermittelt und an eine maximal mögliche Laufzeit angepasst, so dass die Signalkanäle zeitlich auf die ihnen zugeordneten Kanalzeitschlitze des vorgegebenen Zeitmultiplex-Empfangsrahmens normiert sind.

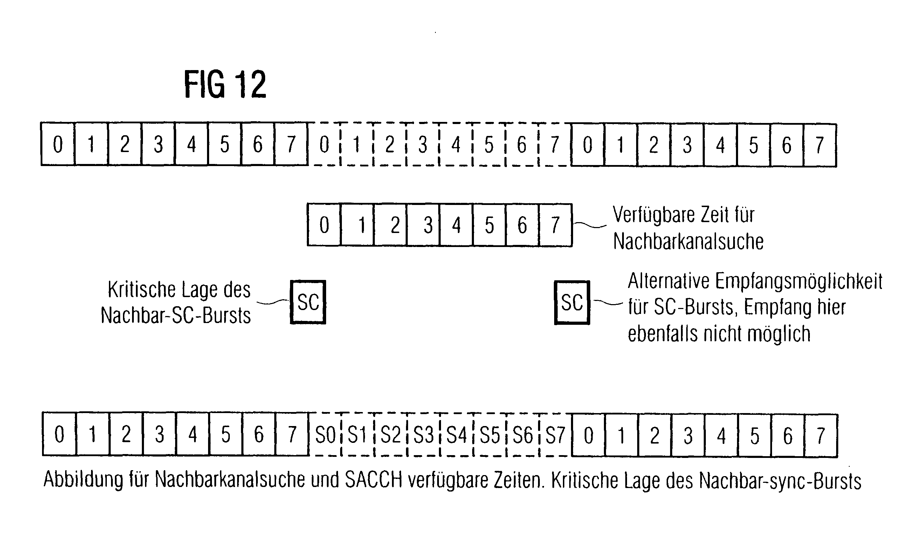

Eine Standard-Mobilstation kann, wie oben erwähnt wurde, im Gesprächszustand alle 26 Rahmen für die Dauer von etwas mehr als einem Zeitrahmen, also etwa neun Zeitschlitzen, einen Nachbarkanal beobachten. Das ist deshalb nötig, da die jeweilige Basisstation und die Mobilstation noch nicht synchronisiert sind und die jeweiligen Zeitschlitze gegeneinander verschoben sein können. Bei Mehrfachzeitschlitz-Mobilstationen tritt das Problem auf, dass die Zeitrahmen vor und nach dem vorgegebenen Zeitrahmen durch die Übertragung von Datenpaketen belegt sein können, und dass dann der vorgegebene Zeitrahmen mit acht Zeitschlitzen zu kurz ist, um ein Synchronisationsdatenpaket einer benachbarten Basisstation mit Sicherheit empfangen und studieren zu können. Es gibt also einen kritischen Bereich der relativen Phasenlagen, in dem das Synchronisationsdatenpaket (SC-Burst) so ungünstig liegt, dass es nicht empfangen und dekodiert werden kann. Dies ist genau dann der Fall, wenn das Synchronisationsdatenpaket die Grenze des vorgegebenen Zeitrahmens überlappt. Dieser Fall ist in Fig. 12 dargestellt.

In Fig. 12 sind mit durchgezogenen Linien die Zeitrahmen mit Zeitschlitzen 0,1...7 dargestellt, in denen eine Mobilstation Datenpakete von einer aktuellen Basisstation empfängt. Die vorgegebenen Zeitrahmen, die zum Empfang von Synchronisationsdatenpaketen und/oder auch zur Messung von Signalpegeln von benachbarten Basisstationen zur Verfügung stehen, sind mit gestrichelten Linien gekennzeichnet. Dabei ist in der oberen Zeile die zeitliche Abfolge des Timings zur Zeit um einen vorgegebenen Zeitrahmen herum dargestellt, während dem die Basisstation keine Datenpakete aussendet, und in der unteren Zeile die zeitliche Abfolge des Timings zu einer späteren Zeit mit einem folgenden vorgegebenen Zeitrahmen, während dem die Basisstation SACCH-Datenpakete aussendet. Die Zeitachsen sind dabei so gewählt, dass das Timing des Synchronisationsdatenpaketes (SC-Burst) der benachbarten Basisstation gleich ist. S0 bis S7 sind dabei die Zeitschlitznummern des SACCH-Kanals, während 0 bis 7 jeweils Zeitschlitznummern der Nutzdatenkanäle sind. Die beiden fett umrandeten Kästchen stellen die beiden kritischen Lagen des Synchronisationsdatenpaketes von der benachbarten Basisstation dar, die sich jeweils direkt am Rand der vorgegebenen Zeitrahmen befinden. Schaltet die Mobilstation nur während der verfügbaren acht Zeitrahmen während des vorgegebenen Zeitrahmens auf den Empfang von Synchronisationsdatenpaketen von der benachbarten Basisstation, so können die in einer der angedeuteten Lagen ankommenden Synchronisationsdatenpakete von der benachbarten Basisstation nicht vollständig empfangen und damit nicht dekodiert und verwendet werden.

Um diesem Problem begegnen zu können, ist deshalb in bekannten Mehrfachzeitschlitz-Mobilstationen ein zweiter Empfänger vorgesehen, der speziell zum Empfang von Synchronisationsdatenpaketen und/oder zur Messung von Signalpegeln von benachbarten Basisstationen dient. Dieser zweite Empfänger wird damit parallel zum ersten Empfänger betrieben, um während des gesamten Zeitabschnittes, der zur Beobachtung bzw. zum Empfang von Synchronisationsdatenpaketen benachbarter Basisstationen notwendig ist, eingesetzt zu werden. Der Einsatz eines zweiten Empfängers ist jedoch kostspielig und energieverbrauchend.

Die Aufgabe der vorliegenden Erfindung ist damit, ein Verfahren zur Übertragung von Datenpaketen zwischen zumindest einer Basisstation und zumindest einer Mobilstation eines Mobilfunksystems gemäß dem Oberbegriff des Anspruches 1 und ein System zur Übertragung von Datenpaketen zwischen zumindest einer Basisstation und zumindest einer Mobilstation eines Mobilfunksystems gemäß dem Anspruch 10 bereitzustellen, bei denen der Einsatz eines zweiten Empfängers in den Mobilstationen nicht notwendig ist.

Diese Aufgabe wird durch ein Verfahren zur Übertragung von Datenpaketen zwischen zumindest einer Basisstation und zumindest einer Mobilstation eines Mobilfunksystems gemäß Anspruch 1 und ein System zur Übertragung von Datenpaketen zwischen zumindest einer Basisstation und zumindest einer Mobilstation eines Mobilfunksystems gemäß Anspruch 10 gelöst.

Das Verfahren zur Übertragung von Datenpaketen gemäß Anspruch 1 ist dabei dadurch gekennzeichnet, dass der Mobilstation jeweils ein Zeitabschnitt, der länger als ein vorgegebener Zeitrahmen ist, zum Empfang von Synchronisationsdatenpaketen und/oder von Signalpegeln von benachbarten Basisstationen zur Verfügung steht.

Entsprechend ist das System zur Übertragung von Datenpaketen gemäß dem Anspruch 10 dadurch gekennzeichnet, dass eine Empfangseinheit der Mobilstation jeweils während eines Zeitabschnittes, der länger als ein vorgegebener Zeitrahmen ist, Synchronisationsdatenpakete von benachbarten Basisstationen empfangen und/oder Signalpegel von benachbarten Basisstationen messen kann.

Die vorliegende Erfindung vermeidet damit in vorteilhafter Weise den Einsatz eines zweiten Empfängers in der Basisstation, wodurch die Kosten und der Energieverbrauch in der Basisstation erheblich gesenkt werden können.

Vorteilhafte Ausgestaltungen der vorliegenden Erfindung sind in den jeweiligen Unteransprüchen angegeben.

Vorteilhafterweise wird die Mobilstation während des Zeitabschnitts auf den Empfang von Synchronisationsdatenpaketen und/oder die Messung von Signalpegeln von benachbarten Basisstationen geschaltet. Es ist außerdem vorteilhaft, wenn die Mobilstation das von der Sendeeinheit der aktuellen Basisstation jeweils unmittelbar vor und/oder nach einem vorgegebenen Zeitrahmen ausgesendete Datenpaket zumindest teilweise nicht empfängt.

Vorteilhafterweise wird dabei das von der aktuellen Basisstation unmittelbar vor- bzw. nach dem vorgegebenen Zeitrahmen ausgesendete Datenpaket am Ende bzw. am Anfang des vorgegebenen Zeitrahmens noch einmal ausgesendet. Alternativ kann das von der aktuellen Basisstation unmittelbar vor- bzw. nach dem vorgegebenen Zeitrahmen ausgesendete Datenpaket während dem vorgegebenen Zeitrahmen noch einmal ausgesendet und dabei von der Mobilstation empfangen werden.

Weiterhin werden in vorteilhafter Weise die zumindest teilweise nicht empfangenen Datenpakete von der Mobilstation mittels der reduntanten Kodierung und anderer empfangener Datenpakete rekonstruiert.

Vorteilhafterweise ist die Länge des Zeitabschnittes, während dem die Mobilstation auf den Empfang von Synchronisationsdatenpaketen von benachbarten Basisstationen geschaltet wird, so gewählt, dass die Mobilstation in einem ersten Zeitabschnitt einen ersten Teil eines Synchronisationsdatenpaketes und in einem zweiten Zeitabschnitt einen zweiten Teil eines Synchronisationsdatenpaketes empfangen kann. Dabei kann im ersten und im zweiten Teil jeweils zumindest ein solcher Abschnitt der Trainingssequenz des Synchronisationsdatenpaketes enthalten sein, der die Bestimmung einer jeweiligen Kanalentzerrung erlaubt.

Vorteilhafterweise sendet eine erste Mobilstation nicht gleichzeitig Datenpakete und wird auf den Empfang von Datenpaketen geschaltet, wobei eine zweite Mobilstation in Zeitschlitzen, in denen die erste Mobilstation Datenpakete aussendet, auf den Empfang von Datenpaketen geschaltet wird, und in Zeitschlitzen, in denen die erste Mobilstation auf den Empfang von Datenpaketen geschaltet wird, Datenpakete aussendet.

Die vorliegende Erfindung wird im Folgenden anhand von Ausführungsbeispielen unter Bezug auf die beigefügten Zeichnungen näher erläutert, in denen zeigen:
Fig. 1 eine grundlegende Anordnung eines Mobilfunksystems mit einer aktuellen Basisstation, einer benachbarten Basisstation und einer Mobilstation,
Fig. 2 ein erstes Ausführungsbeispiel der vorliegenden Erfindung,
Fig. 3 ein zweites Ausführungsbeispiel der vorliegenden Erfindung,
Fig. 4 ein drittes Ausführungsbeispiel der vorliegenden Erfindung,
Fig. 5 ein viertes Ausführungsbeispiel der vorliegenden Erfindung,
Fig. 6 ein fünftes Ausführungsbeispiel der vorliegenden Erfindung,
Fig. 7 ein sechstes Ausführungsbeispiel der vorliegenden Erfindung,
Fig. 8 ein siebtes Ausführungsbeispiel der vorliegenden Erfindung,
Fig. 9 eine Darstellung des kritischen Überlappungsbereiches bei Mehrfachzeitschlitz-Mobilstationen,
Fig. 10 ein achtes Ausführungsbeispiel der vorliegenden Erfindung,
Fig. 11 ein neuntes Ausführungsbeispiel der vorliegenden Erfindung, und
Fig. 12 die kritische Lage von Synchronisationsdatenpaketen in einem Mobilfunksystem des Standes der Technik.

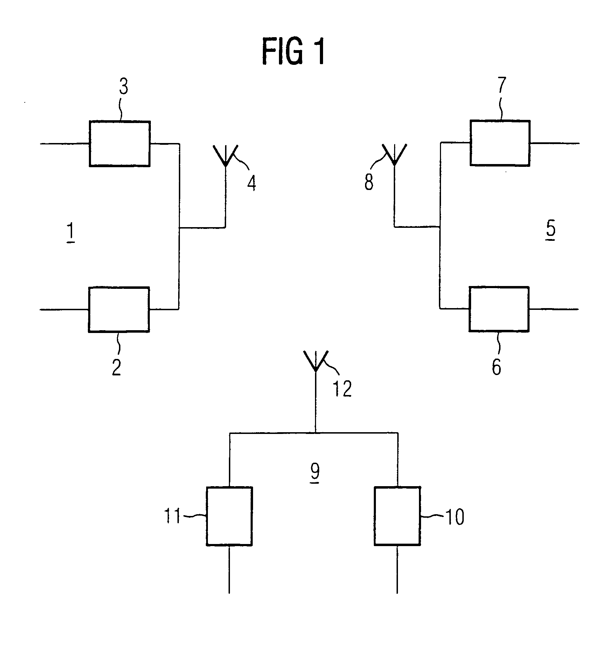

Fig. 1 zeigt den grundlegenden Aufbau eines Mobilfunksystems mit einer aktuellen Basisstation 1, die eine Empfangseinheit 2, eine Sendeeinheit 3 und eine gemeinsame Antenne 4 umfasst. Weiterhin ist eine Mobilstation 5 vorgesehen, die eine Empfangseinheit 6, eine Sendeeinheit 7 und eine gemeinsame Antenne 8 aufweist, ebenso wie eine benachbarte Basisstation 9, die ebenfalls eine Empfangseinheit 10, eine Sendeeinheit 11 und eine gemeinsame Antenne 12 umfasst. Die Mobilstation 5 befindet sich mit der aktuellen Basisstation 1 in einer Gesprächsverbindung und schaltet während vorgegebener Zeitrahmen, während denen die aktuelle Basisstation 1 keine Datenpakete oder Steuerdatenpakete wie z.B. SACCH-Daten, an die Mobilstation 5 sendet, auf den Empfang von Synchronisationsdatenpaketen und/oder auf die Messung von Signalpegeln von der benachbarten Basisstation 9. Gemäß der vorliegenden Erfindung schaltet dabei die Empfangseinheit 6 der Mobilstation 5 jeweils während eines oder einem Teil eines Zeitabschnittes, der länger als ein vorgegebener Zeitrahmen ist, auf den Empfang von Synchronisationsdatenpaketen und/oder die Messung von Signalpegeln unter anderem der benachbarten Basisstation 9.

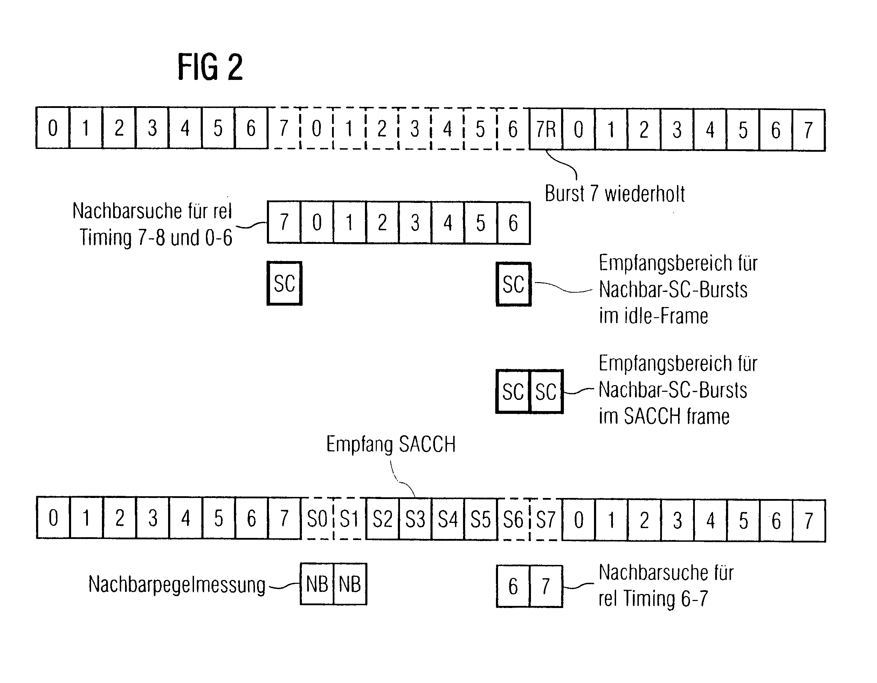

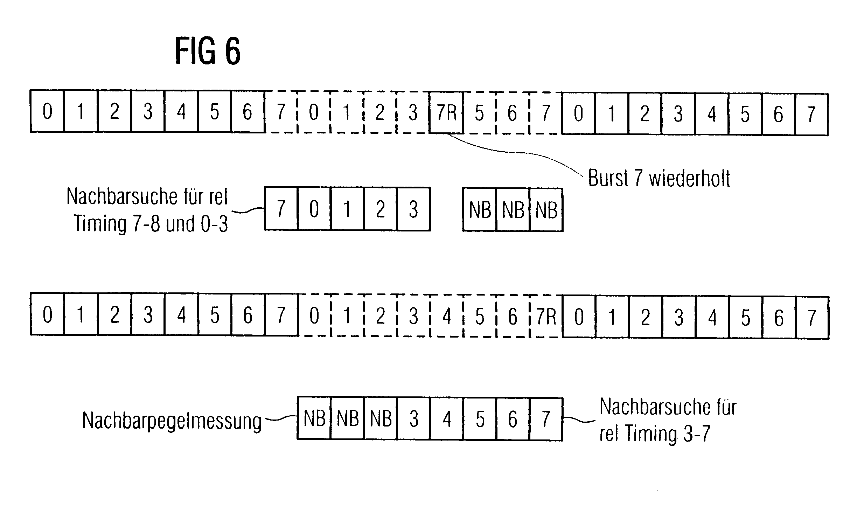

Den in Fig. 2 bis Fig. 7 gezeigten Ausführungsbeispielen der vorliegenden Erfindung ist gemeinsam, dass die Sendeeinheit 3 der aktuellen Basisstation 1 ein der Mobilstation 5 übersendetes Datenpaket, das sich unmittelbar vor- bzw. nach dem vorgegebenen Zeitrahmen befindet, noch einmal aussendet. Dabei wird in den Ausführungsbeispielen der Fig. 2, 3, 4, 5 und 7 das noch einmal ausgesendete Datenpaket am Ende bzw. am Anfang des vorgegebenen Zeitrahmens noch einmal ausgesendet, während in dem Ausführungsbeispiel von Fig. 6 die Sendeeinheit 3 der aktuellen Basisstation 1 das noch einmal ausgesendete Datenpaket während dem vorgegebenen Zeitrahmen noch einmal aussendet und die Empfangseinheit 6 der Mobilstation 5 dieses Datenpaket auch während dem vorgegebenen Zeitrahmen empfängt.

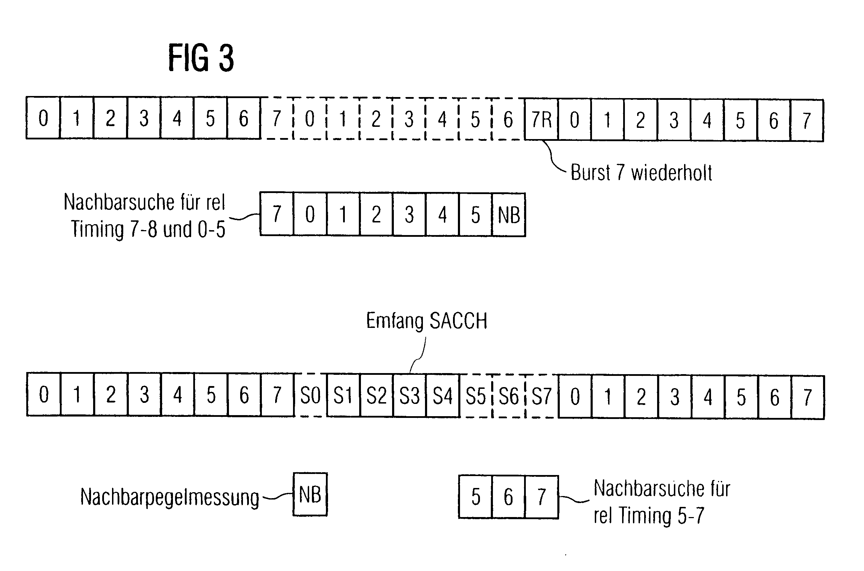

Die Darstellung der Ausführungsbeispiele in den Fig. 2 bis 7 entspricht der Darstellung der Fig. 12. In der obersten Zeile sind jeweils die von der aktuellen Basisstation 1 ausgesendeten Datenpakete in den Zeitschlitzen 0 bis 7 mit den durchgezogenen Linien dargestellt, während ein vorgegebener Zeitrahmen, während dem die Basisstation 1 keine Datenpakete aussendet, durch die gestrichelten Linien gezeigt ist. Die Suche der Mobilstation 5 nach Synchronisationsdatenpaketen bzw. die Messung von Signalpegeln von der benachbarten Basisstation 9 findet jeweils in den in der zweiten Zeile dargestellten Zeitschlitzen 0 bis 7 mit durchgezogenen Linien statt. Die fett umrandeten Kästchen, die die kritischen Lagen der von der benachbarten Basisstation 9 ausgesendeten Synchronisationsdatenpakete (SC-Bursts) kennzeichnen (vgl. Fig. 12),sind in den Fig. 3-7 und 9-11 nicht dargestellt. Bei einer Standard-Mobilstation geschieht die Messung der Signalpegel bzw. der Nachbarfeldstärken in einem Zeitschlitz, der nicht zum Senden oder Empfangen genutzt wird, bei einer Mehrfachzeitschlitz-Mobilstation kann das ebenfalls im vorgegebenen Zeitrahmen durchgeführt werden. Diese Möglichkeit ist in den Figuren durch die mit NB gekennzeichneten Kästchen dargestellt, die Zeitschlitze kennzeichnen, in denen die Mobilstation 5 die Feldstärke der Kanäle bzw. die Signalpegel benachbarter Basisstationen misst.

Weiterhin ist es möglich, dass, wie beispielsweise in den Ausführungsbeispielen der Fig. 2 und 3 dargestellt ist, die Mobilstation 5 in bestimmten Zeitschlitzen des SACCH-Zeitrahmens keine oder nicht alle SACCH-Datenpakete von der Basisstation empfängt. In der derzeitigen Fassung der GSM-Empfehlungen muss eine Mobilstation auf allen Zeitschlitzen eines SACCH-Zeitrahmens SACCH-Datenpakete empfangen und (mindestens) in den Zeitschlitzen, in denen sie sendet, diese Informationen auch benutzen. Dadurch wird die Leistung der Mobilstationen im Uplink geregelt. Es ist aber auch möglich, auf den Empfang gewisser Zeitschlitze zu verzichten, wobei die Mobilstation dann die gleiche Leistung wie bei den anderen Zeitschlitzen verwenden muss. Dieses Prinzip wird schon jetzt im Downlink für den Fall angewandt, dass die Mobilstation auf weniger Zeitschlitzen sendet als empfängt. In den unteren Zeilen der Darstellungen von Fig. 2 und 3 ist jeweils eine derartige Situation gezeigt, bei der auf den Empfang von SACCH-Datenpaketen in jeweils vier Zeitschlitzen des SACCH-Zeitrahmens (S0, S1..., S7) verzichtet wird.

In Fig. 2 ist das erste Ausführungsbeispiel der vorliegenden Erfindung dargestellt, bei dem die aktuelle Basisstation 1 das Datenpaket des Zeitschlitzes 7 unmittelbar vor dem vorgegebenen Zeitrahmen am Ende des Leer-Zeitrahmens noch einmal aussendet. Dieses redundant wiederholte Datenpaket ist durch das Kästchen 7R gekennzeichnet. Dieses redundante Aussenden des letzten Datenpaketes vor dem vorgegebenen Datenpaket am Ende des vorgegebenen Datenpaketes wird auch in dem zweiten bis fünften Ausführungsbeispiel ausgeführt.

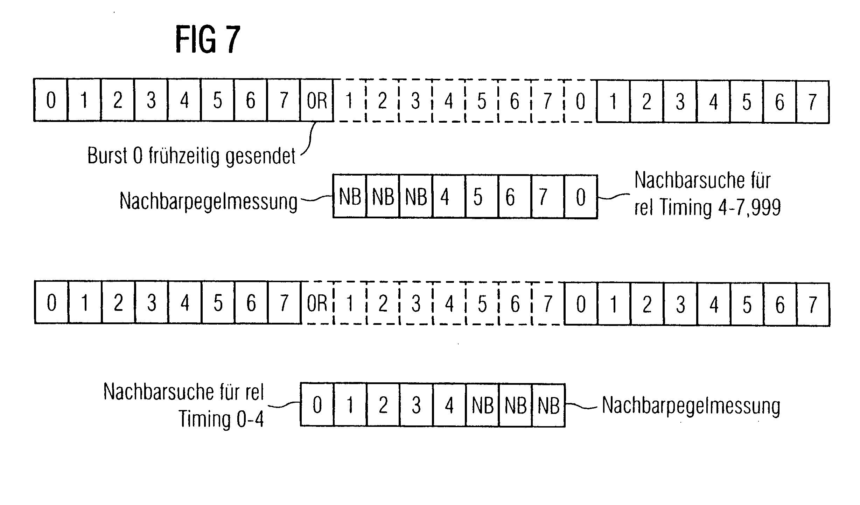

In dem in Fig. 7 gezeigten sechsten Ausführungsbeispiel wird das Datenpaket des Zeitschlitzes 0 unmittelbar nach dem vorgegebenen Datenpaket bereits am Anfang des vorgegebenen Datenpaketes ausgesendet, wie durch das Kästchen 0R gekennzeichnet ist.

Allen in den Figuren 2 bis 7 gezeigten Ausführungsbeispielen ist daher gemeinsam, dass die Basisstation 1 die in einem Zeitschlitz am Rand des vorgegebenen Zeitrahmens gesendeten Datenpakete doppelt sendet und die Mobilstation 5 kann diese Informationen dann wahlweise auch zu dem alternativen Zeitpunkt empfangen und gewinnt dadurch zusätzlich Zeit, die Suche nach Synchronisationsdatenpaketen und/oder die Messung von Signalpegeln von der benachbarten Basisstation 9 durchzuführen. Diese zusätzlich gewonnene Zeit reicht gerade dazu aus, die Synchronisation der benachbarten Basisstationen in allen auftretenden Fällen durchführen zu können.

Wie in der unteren Zeile von Fig. 2 gezeigt ist, wird die Empfangseinheit 6 der Mobilstation 5 während der ersten beiden Zeitschlitze S0, S1 des SACCH-Zeitrahmens auf den Empfang und die Messung von Signalpegeln von benachbarten Basisstationen geschaltet. In den letzten beiden Zeitschlitzen 6 und 7 des SACCH-Zeitrahmens wird die Empfangseinheit 6 der Mobilstation 5 auf den Empfang von Synchronisationsdatenpaketen von benachbarten Basisstationen geschaltet.

In dem in Fig. 3 gezeigten Ausführungsbeispiel wird die Empfangseinheit 6 der Mobilstation 5 im letzten Zeitschlitz (in diesem Fall Zeitschlitz 6) des zum Empfang von Synchronisationsdatenpaketen von der benachbarten Basisstation 9 verwendeten Zeitrahmens 7,0...6 auf den Empfang und die Messung von Nachbarsignalpegeln geschaltet. Im SACCH-Zeitrahmen wird der erste Zeitschlitz S0 zur Messung von Nachbarpegeln verwendet, während die letzten drei Zeitschlitze S5, S6 und S7 zur Suche nach Synchronisationsdatenpaketen verwendet werden. Die Zeitschlitze S1, S2, S3, S4 des SACCH-Rahmens werden wie vorgesehen von der aktuellen Basisstation 1 empfangen.

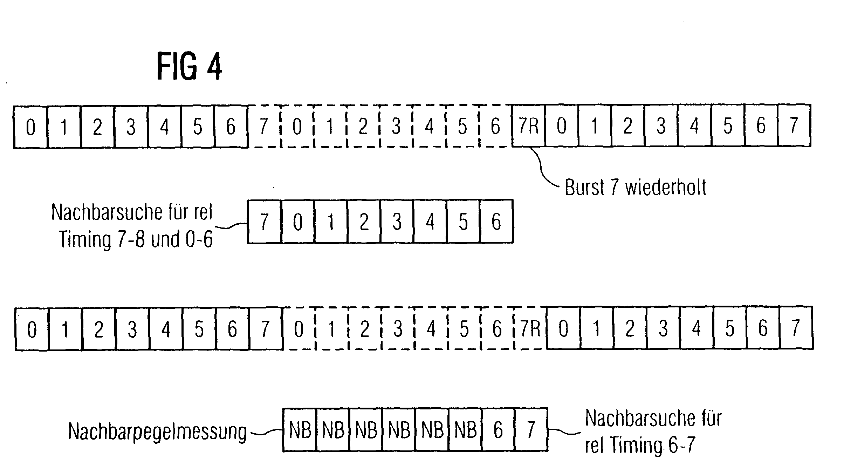

Im in der Fig. 4 gezeigten Ausführungsbeispiel wird während aller Zeitschlitze 7, 0, ...6, die Empfangseinheit 6 der Mobilstation 5 auf den Empfang von Synchronisationsdatenpaketen von der benachbarten Basisstation 9 geschaltet. Im nächsten vorgegebenen Zeitrahmen, der in der unteren Zeile der Fig. 4 dargestellt ist, werden dann die ersten sechs Zeitschlitze 0,1...5 zur Messung der Signalpegel von benachbarten Basisstationen verwendet, während die letzten beiden Zeitschlitze 6, 7 zur Suche nach Synchronisationsdatenpaketen verwendet werden.

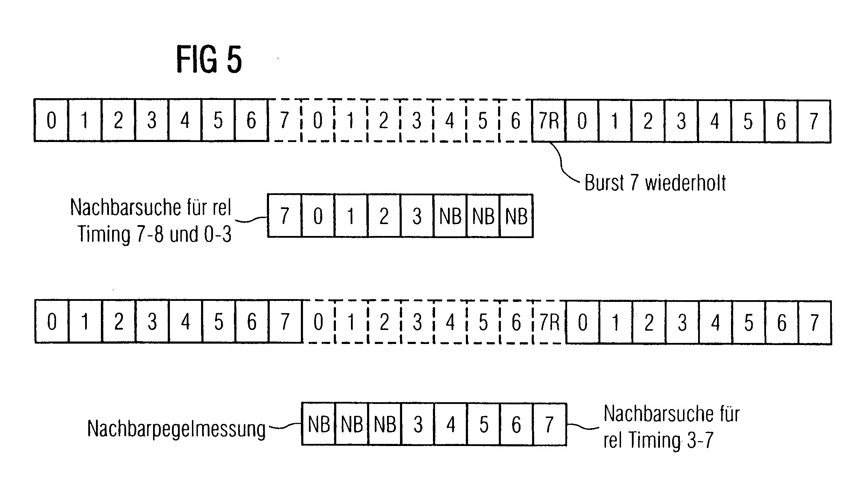

Im in der Fig. 5 dargestellten Ausführungsbeispiel werden die letzten drei Zeitschlitze des vorgegebenen Zeitrahmens zur Messung von Signalpegeln benachbarter Basisstationen verwendet, während die ersten fünf Zeitschlitze 7,0, ...3 zur Suche nach Synchronisationsdatenpaketen verwendet werden. Im darauffolgenden vorgegebenen Zeitrahmen, der in der unteren Zeile der Fig. 5 dargestellt ist, werden dann die ersten drei Zeitschlitze 0,1,2 zur Messung von Signalpegeln benachbarter Basisstationen verwendet, während die letzten fünf Zeitschlitze 3, 4, ...7 zur Suche nach Synchronisationsdatenpaketen verwendet werden.

Im in der Fig. 6 dargestellten Ausführungsbeispiel werden die ersten fünf Zeitschlitze 7,0...3 des vorgegebenen Zeitrahmens zur Suche nach Synchronisationsdatenpaketen benachbarter Basisstationen verwendet, während die aktuelle Basisstation 1 im fünften Zeitschlitz 4 das Datenpaket 7R noch einmal aussendet, das sie bereits unmittelbar vor dem Leer-Zeitrahmen ausgesendet hatte. In den darauffolgenden drei Zeitschlitzen misst die Mobilstation 5 Signalpegel benachbarter Basisstationen. Im darauffolgenden vorgegebenen Zeitrahmen, der in der unteren Zeile der Fig. 6 dargestellt ist, wird in den ersten drei Zeitschlitzen des Leer-Zeitrahmens eine Messung der Signalpegel benachbarter Basisstationen durchgeführt, während in den folgenden fünf Zeitschlitzen 3, 4, ...7 eine Suche nach Synchronisationsdatenpaketen durchgeführt wird.

Im in der Fig. 7 gezeigten Ausführungsbeispiel sendet die aktuelle Basisstation das Datenpaket des Zeitschlitzes 0 unmittelbar nach dem Ende des vorgegebenen Zeitrahmens bereits am Anfang des vorgegebenen Zeitrahmens, wie durch das Kästchen 0R dargestellt ist. In den ersten drei Zeitschlitzen des Leer-Zeitrahmens misst die Mobilstation 5 Signalpegel benachbarter Basisstationen, während sie in den letzten fünf Zeitschlitzen 4, 5, ...0 nach Synchronisationsdatenpaketen sucht. Im darauffolgenden vorgegebenen Zeitrahmen, der in der unteren Zeile der Fig. 7 dargestellt ist, sucht die Mobilstation 5 während der ersten fünf Zeitschlitze 0, 1...4 des vorgegebenen Zeitrahmens nach Synchronisationsdatenpaketen benachbarter Basisstationen, während sie in den letzten drei Zeitschlitzen eine Messung der Signalpegel benachbarter Basisstationen durchführt.

Allen Ausführungsbeispielen der Fig. 2 bis 7 ist gemeinsam, dass die Mobilstation 5 das jeweils unmittelbar vor und/oder nach dem vorgegebenen Zeitrahmen ausgesendete Datenpaket zumindest teilweise nicht empfängt, da die einzige Empfangseinheit 6 der Mobilstation 5 während eines Zeitabschnittes, der länger als ein vorgegebener Zeitrahmen ist, auf den Empfang von Synchronisationsdatenpaketen und/oder die Messung von Signalpegeln von benachbarten Basisstationen schaltet.

Wenn die Sendeeinheit 3 der aktuellen Basisstation 1 überhaupt keine Wiederholung von Datenpaketen durchführt, kann die Empfangseinheit 6 der Mobilstation 5 auch den Empfang des letzten Zeitschlitzes vor oder des ersten Zeitschlitzes nach dem vorgegebenen Zeitrahmen unterdrücken. Da nämlich die auszusenden den Daten in der Basisstation 1 redundant kodiert werden, lassen sich bei entsprechend guten Feldstärken und/oder Empfangsbedingungen die von der Mobilstation 5 empfangenen Daten vollständig dekodieren. Bei nicht optimalen Empfangsbedingungen sind allerdings höhere Fehlerraten zu erwarten. Würden die Datenpakete in den beiden Zeitschlitzen am Rand des vorgegebenen Zeitrahmens jeweils teilweise nicht empfangen, so wird hierdurch eine bessere Verteilung ggfs. vorhandener Bits bewirkt, so dass hier auch bei schlechteren Empfangsbedingungen eine ausreichende Empfangsqualität vorhanden sein kann.

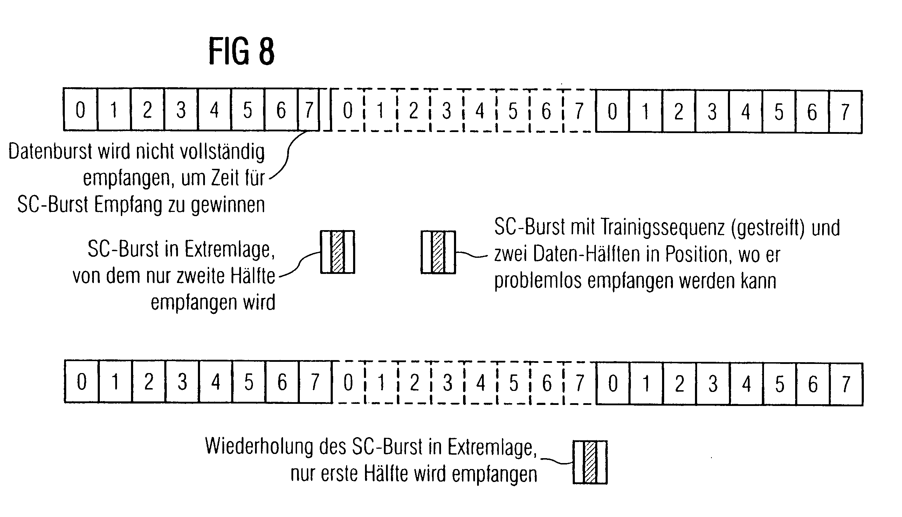

Bei dem in Fig. 8 gezeigten siebten Ausführungsbeispiel der vorliegenden Erfindung ist die Länge des Zeitabschnittes, während dem die Empfangseinheit 6 der Mobilstation 5 auf den Empfang von Synchronisationsdatenpaketen und/oder die Messung von Signalpegeln von benachbarten Basisstationen schaltet, so gewählt, dass die Empfangseinheit 6 der Mobilstation 5 in einem ersten Zeitabschnitt einen ersten Teil eines Synchronisationsdatenpaketes und in einem zweiten Zeitabschnitt einen zweiten Teil eines Synchronisationsdatenpaketes empfangen kann.

Der erste Zeitabschnitt ist in der Fig. 8 durch die gestrichelten Kästchen 0,1...7 in der ersten Zeile dargestellt, während der zweite Zeitabschnitt in der zweiten Zeile ebenfalls durch gestrichelte Kästchen 0,1...7 gekennzeichnet ist. Wenn im Synchronisationsdatenpaket immer die gleichen Daten kodiert werden, könnte man diesen Burst einfach in zwei Teilen empfangen, zuerst die Bits Nr. 3 bis 105 (die erste Hälfte), später die Bits Nr. 42 bis 144 (die zweite Hälfte). Die Trainingssequenz (Bits Nr. 42 bis 105) muss dabei doppelt empfangen werden, da sie benötigt wird, um die Kanalverzerrung zu schätzen, welche dann zur Entzerrung der Nutzdaten verwendet wird. Allerdings könnte dazu auch ein kürzerer Ausschnitt der Trainingsfrequenz ausreichen, wodurch der notwendige Zeitabschnitt weiter verkürzt wird. Die Trainingssequenz des Synchronisationsdatenpaketes ist so lang, damit sie leicht durch Korrelation gefunden werden kann. Zur Schätzung der Kanalimpulsantwort wäre eine kürzere Trainingssequenz ausreichend. Allerdings lässt sich dann nicht das Verfahren der Korrelation anwenden, sondern es muss ein Gleichungssystem gelöst werden. Je nach Empfangsbedingungen kann der notwendige Teil der Trainingssequenz auch kürzer oder länger sein.

Allerdings sind die Daten im Synchronisationsdatenpaket nicht konstant, sondern enthalten auch die jeweilige Zeitrahmennummer. Diese Zeitrahmennummer ist in der jeweiligen Trainingssequenz kodiert enthalten. Dekodiert man die Zeitrahmennummer, dann ändert sich in der überwiegenden Anzahl der Fälle nur ein einziges Bit. Diese Änderung um ein Bit lässt sich durch eine Exclusive-OR-Operation darstellen. Die Art der Kodierung des Synchronisationsdatenpaketes (Faltungscode und Firecode) gestattet es auf relativ einfache Weise, eine solche Exclusive-OR-Operation auch auf den kodierten Bits durchzuführen und damit aus der empfangenen ersten Hälfte des Synchronisationsdatenpaketes zu einer Zeit die nicht empfangene Hälfte des Synchronisationsdatenpaketes zu einer zweiten Zeit zu berechnen. Bei Faltungscodes müssen die betroffenen kodierten Bits einfach invertiert werden, bei Fire-Codes bestimmt die entsprechende Polynomdivision die zu ändernden Bits vor Anwendung des Faltungscodes, und die zu invertierenden Bits.

Damit kann dann eine Dekodierung in bekannter Weise durchgeführt werden. Diese Dekodierung ist selbstverständlich nur in den 50 % der Fälle erfolgreich, in denen tatsächlich nur ein Bit unterschiedlich ist. Sollte die Dekodierung fehlschlagen, so können successive auch die Fälle, in denen sich die entsprechenden Bits der kodierten Zeitrahmennummer in der Trainingssequenz ändern, berücksichtigt werden. Alternativ läßt sich auch ein weiterer Dekodierversuch zu einem späteren Zeitpunkt durchführen. Dieser Zeitpunkt wäre 26+(4 oder 5) mal 51 = 230 oder 281 Zeitrahmen später.

Bei diesem Ausführungsbeispiel der vorliegenden Erfindung muss der Zeitabschnitt, in dem die Mobilstation auf den Empfang von Synchronisationsdatenpaketen von benachbarten Basisstationen geschaltet wird, nicht 9 Zeitschlitze lang sein, sondern 8 Zeitschlitze plus die Länge des zur Kanalschätzung nötigen Teils der Trainingssequenz + Länge einer Datenhälfte des Synchronisationsdatenpaketes. Es wird also die Zeit der zweiten Datenhälfte des Synchronisationsdatenpaketes + ggfs. der Teil der Trainingssequenz, der für eine Dekodierung nicht benötigt wird, eingespart. In dieser eingesparten Zeit können Nutzdatenpakete empfangen werden.

Das siebte Ausführungsbeispiel ist insbesondere in Kombination mit einem der vorherigen Ausführungsbeispiele vorteilhaft, wenn bei diesem die Empfangseinheit 6 der Mobilstation 5 zu viel Zeit benötigt, um auf den entsprechenden Kanal zum Empfang von Synchronisationsdatenpaketen von benachbarten Basisstationen umzuschalten.

Wie oben bereits erwähnt wurde, wurden zur Erhöhung der Datenrate gegenüber Standard-Mobilstationen Mehrfachzeitschlitz-Mobilstationen definiert, die auf mehreren Zeitschlitzendaten empfangen und senden. Wenn eine derartige Mehrfachzeitschlitz-Mobilstation gleichzeitig senden und empfangen muss, weil sich Sende- und Empfangszeitschlitze überlagern, so führt das zu einem deutlich erhöhten Aufwand des Aufbaus der Mobilstation, da die Sendeeinheit und die Empfangseinheit keine gemeinsamen Komponenten erteilen können, wie z.B. Synthesizer, Stromversorgung, Teile von A/D- und D/A-Umsetzern, Timingsignale etc., da die Empfangseinheit gegen den Sender sowohl abgeschirmt sein muss, dass er durch dies nicht gestört wird, wodurch aufwendigere Abschirmmaßnahmen nötig werden, und da zur Antenne hin zwingend ein Duplexer verwendet werden muss. Diese günstige Situation ist nach dem Stand der Technik aber nur dann möglich, wenn höchstens zwei Zeitschlitze zum Senden und höchstens fünf Zeitschlitze zum Empfangen verwendet werden. In der Klassenabteilung für GSM-Mobilstationen sind sogen. Typl-Mobilstationen, d.h. Mobilstationen, die nicht gleichzeitig senden und empfangen, daher nur für eine begrenzte Kombination von Sende/Empfangs-Zeitschlitzen definiert.

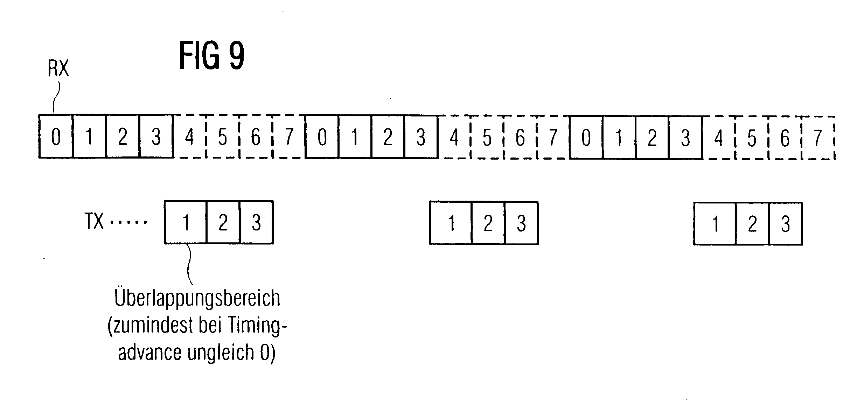

In Fig. 9 ist eine derartige Überlappung von Sende- und Empfangszeitschlitzen in einer Mobilstation dargestellt. Die erste Zeile stellt dabei die empfangenen Zeitschlitze 0,1,2,3 mit durchgezogenen Linien dar, während in der zweiten Zeile die ausgesendeten Zeitschlitze 1,2,3 ebenfalls mit durchgezogenen Linien dargestellt sind. Der Überlappungsbereich zwischen dem ausgesendeten Zeitschlitz 1 und dem empfangenen Zeitschlitz 3 ist dabei für einen Timingadvance ungleich Null dargestellt. Im in der Fig. 9 dargestellten Beispiel handelt es sich um eine 4E3S-Mobilstation, bei der maximal vier Zeitschlitze nacheinander empfangen und maximal drei Zeitschlitze nacheinander gesendet werden. Abgesehen vom Überlappungsbereich werden keine Zeitschlitze gesendet, während Zeitschlitze empfangen werden und umgekehrt.

Die bekannten Mobilstationen haben somit den Nachteil, dass durch die in Fig. 9 erklärte Überlappung zwischen Sende- und Empfangszeitschlitzen ein erhöhter Aufwand an Elementen in der Mobilstation nötig war. Weiterhin wurden sogen. Half-Duplex-Mobilstationen eingeführt. Bei diesen Mobilstationen empfängt die Mobilstation für eine vorgegebene Zeit ausschließlich, sendet aber nicht, und führt auch keine Nachbarkanalmessungen durch. Dann macht die Mobilstation beim Empfang eine Pause und führt in dieser Pause Nachbarkanalmessungen durch, woraufhin sie auf Senden schaltet. Das ist insbesondere für unsymmetrischen Betrieb interessant, wie z.B. einer hohen Datenrate im Downlink, einer niedrigen Datenrate im Uplink (Internet-Surfen). Nachteilig bei diesem Verfahren ist die Tatsache, dass die Übertragungskapazität der Basisstation wegen der Pausen nicht voll ausgenutzt werden kann.

Diesem Problem wird im achten und im neunten Ausführungsbeispiel begegnet, bei denen eine erste Mobilstation nicht gleichzeitig Datenpakete aussendet und auf den Empfang von Datenpaketen geschaltet wird, wobei eine zweite Mobilstation in Zeitschlitzen, in denen die erste Mobilstation Datenpakete aussendet, auf den Empfang von Datenpaketen geschaltet wird, und in Zeitschlitzen, in denen die erste Mobilstation auf den Empfang von Datenpaketen geschaltet wird, Datenpakete aussendet.

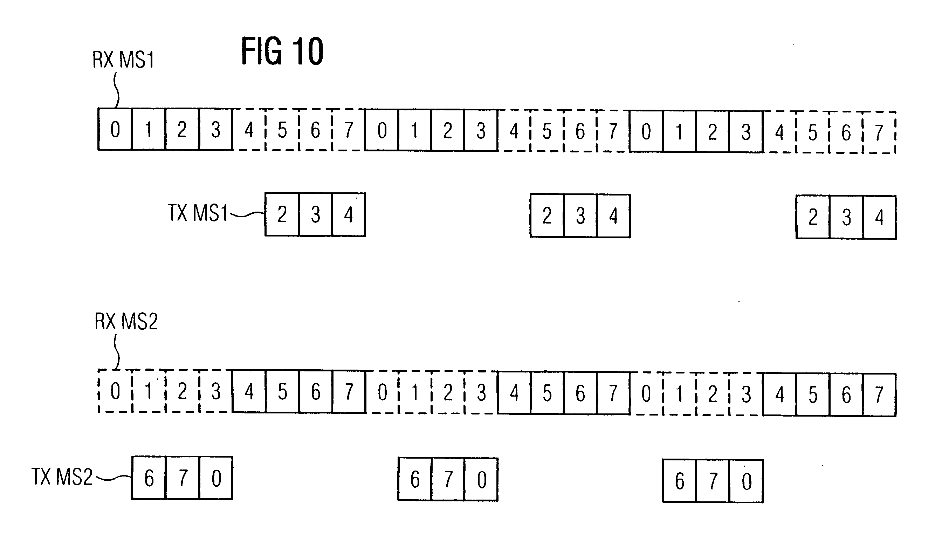

In der Figur 10 sind dabei in der ersten Zeile mit durchgezogenen Linien die Zeitschlitze 0, 1, 2, 3 dargestellt, in denen von einer ersten Mobilstation Datenpakete empfangen werden, während in der zweiten Zeile diejenigen Zeitschlitze 2, 3, 4 dargestellt sind, in denen von der ersten Mobilstation Datenpakete ausgesendet werden. In der dritten Zeile sind jeweils diejenigen Zeitschlitze 4, 5, 6, 7 mit durchgezogenen Linien dargestellt, in denen von der zweiten Mobilstation Datenpakete empfangen werden, während in der vierten Zeile jeweils diejenigen Zeitschlitze 6, 7, 0 dargestellt sind, in denen von der zweiten Mobilstation Datenpakete ausgesendet werden. Es werden also diejenigen Sende- oder Empfangszeitschlitze, die zum gleichzeitigen Senden und Empfangen in einer Mobilstation verwendet würden, zeitlich auf andere Zeitschlitze verschoben, wobei kein gleichzeitiges Senden und Empfangen vorkommen kann. Dadurch belegt die Mobilstation zwar insgesamt mehr Zeitschlitze und damit mehr Netzressourcen als notwendig. Das wird aber dadurch ausgeglichen, dass die zweite Mobilstation so verschachtelt sendet bzw. empfängt, dass dennoch alle acht Zeitschlitze pro Zeitrahmen genutzt werden. Die zweite Mobilstation kann dabei entweder ebenfalls eine erfindungsgemäß sendende Mobilstation, oder auch eine herkömmliche Mehrfachzeitschlitz-Mobilstation sein, die jedoch auf weniger Zeitschlitzen sendet als empfängt.

Im in der Fig. 10 dargestellten achten Ausführungsbeispiel ist das überlappungsfreie Senden und Empfangen von zwei 4E3S-Mobilstationen dargestellt. Das Ausführungsbeispiel gilt auch, falls die zweite Mobilstation auf vier Zeitschlitzen empfängt und auf zwei Zeitschlitzen sendet, wobei dann der Sendezeitschlitz 0 der zweiten Mobilstation (vierte Zeile in Fig. 10) unbelegt ist.

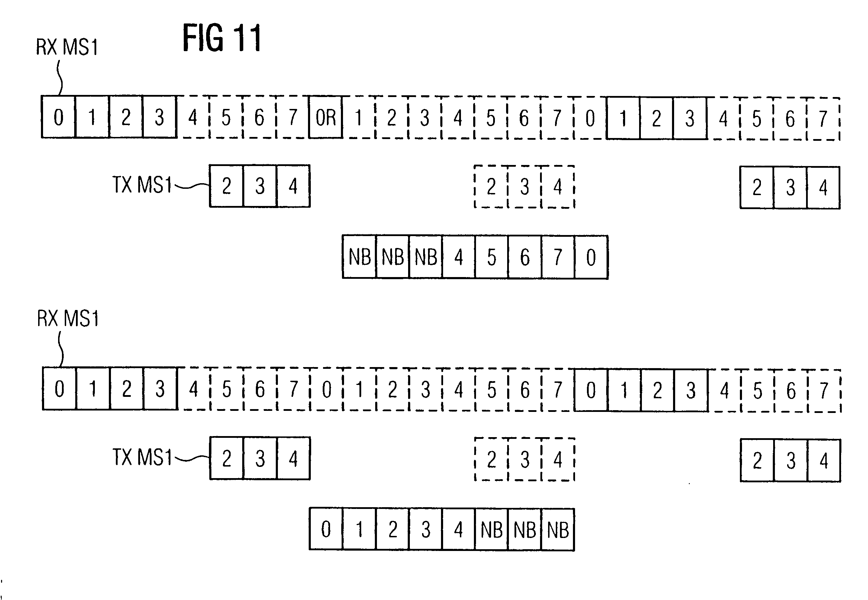

Im in der Fig. 11 dargestellten neunten Ausführungsbeispiel ist die notwendige Kombination mit einem der vorhergehenden Ausführungsbeispiele 2 bis 7 dargestellt. Da nämlich die Zeit für die Suche nach Synchronisationsdatenpaketen benachbarter Basisstationen im vorgegebenen Zeitrahmen weniger als 9 Zeitschlitze beträgt, muss selbstverständlich gleichzeitig eines der Ausführungsbeispiele 2 bis 7 angewendet werden, um eine Synchronisation mit benachbarten Basisstationen durchführen zu können. Wie in Fig. 11 zu erkennen ist, sendet die aktuelle Basisstation dabei das Datenpaket des Zeitschlitzes unmittelbar nach einem vorgegebenen Zeitrahmen bereits unmittelbar vor Beginn des vorgegebenen Zeitrahmens, wie durch den Zeitschlitz 0R verdeutlich ist. Die erste Mobilstation führt aber in den ersten drei Zeitschlitzen des vorgegebenen Zeitrahmens eine Messung der Signalpegel benachbarter Basisstationen durch, während sie in den nächsten fünf Zeitschlitzen 4, 5, ...0 nach Synchronisationsdatenpaketen benachbarter Basisstationen sucht. In der unteren Hälfte der Fig. 11 ist dabei die Nachbarkanalsuche der ersten Mobilstation im darauffolgenden vorgegebenen Zeitrahmen dargestellt, wobei die Mobilstation in den ersten fünf Zeitschlitzen 0,1...4 nach Synchronisationsdatenpaketen benachbarter Basisstationen sucht und in den letzten drei Zeitschlitzen die Signalpegel benachbarter Basisstationen misst. Die in Fig. 11 beispielhaft erklärte erste Mobilstation ist ebenfalls eine 4E3S-Mobilstation.

### Bezugszeichenliste

- 1: aktuelle Basisstation
- 2: Empfangseinheit der aktuellen Basisstation
- 3: Sendeeinheit der aktuellen Basisstation
- 4: Antenne der aktuellen Basisstation
- 5: Mobilstation
- 6: Empfangseinheit der Mobilstation
- 7: Sendeeinheit der Mobilstation
- 8: Antenne der Mobilstation
- 9: benachbarte Basisstation
- 10: Empfangseinheit der benachbarten Basisstation
- 11: Sendeeinheit der benachbarten Basisstation
- 12: Antenne der benachbarten Basisstation

## Patentansprüche

1. Verfahren zur Übertragung von Datenpaketen zwischen zumindest einer Basisstation und zumindest einer Mobilstation eines Mobilfunksystems, wobei
die Datenpakete jeweils in aus einer festen Anzahl von Zeitschlitzen bestehenden Zeitrahmen übertragen werden und die Mobilstation Datenpakete in mehreren aufeinanderfolgenden Zeitschlitzen übertragen kann,
bei dem, während die Mobilstation sich in Verbindung mit einer aktuellen Basisstation befindet, die aktuelle Basisstation während vorgegebener Zeitrahmen Steuerdatenpakete oder keine Datenpakete an die Mobilstation sendet,
**dadurch gekennzeichnet,**
**dass** der Mobilstation jeweils ein Zeitabschnitt, der länger als ein vorgegebener Zeitrahmen ist, zum Empfang von Synchronisationsdatenpaketen und/oder zur Messung von Signalpegeln von benachbarten Basisstationen zur Verfügung steht.

2. Verfahren zur Übertragung von Datenpaketen nach Anspruch 1,
**dadurch gekennzeichnet,**
**dass** die Mobilstation während des Zeitabschnittes, der länger als der vorgegebene Zeitrahmen ist, auf den Empfang von Synchronisationsdatenpaketen und/oder die Messung von Signalpegeln von benachbarten Basistationen geschaltet wird.

3. Verfahren zur Übertragung von Datenpaketen nach Anspruch 1 oder 2,
**dadurch gekennzeichnet,**
**dass** das von der aktuellen Basisstation jeweils unmittelbar vor und/oder nach einem vorgegebenen Zeitrahmen ausgesendete Datenpaket von der Mobilstation zumindest teilweise nicht empfangen wird.

4. Verfahren zur übertragung von Datenpaketen nach Anspruch 3,
**dadurch gekennzeichnet,**
**dass** die zumindest teilweise nicht empfangenen Datenpakete von der Mobilstation mittels der redundanten Codierung anderer empfangener Datenpakete rekonstruiert werden.

5. Verfahren zur Übertragung von Datenpaketen nach einem der vorhergehenden Ansprüche,
**dadurch gekennzeichnet,**
**dass** das von der aktuellen Basisstation unmittelbar vor bzw. nach dem vorgegebenen Zeitrahmen ausgesendete Datenpaket am Ende bzw. am Anfang des vorgegebenen Zeitrahmens noch einmal ausgesendet wird.

6. Verfahren zur Übertragung von Datenpaketen nach einem der Ansprüche 1-4,
**dadurch gekennzeichnet,**
**dass** das von der aktuellen Basisstation unmittelbar vor bzw. nach dem vorgegebenen Zeitrahmen ausgesendete Datenpaket während dem vorgegebenen Zeitrahmen noch einmal ausgesendet und dabei von der Mobilstation empfangen wird.

7. Verfahren zur Übertragung von Datenpaketen nach einem der vorhergehenden Ansprüche,
**dadurch gekennzeichnet,**
**dass** die Länge des Zeitabschnittes, während dem die Mobilstation auf den Empfang von Synchronisationsdatenpaketen von benachbarten Basisstationen geschaltet wird, so gewählt ist, dass die Mobilstation in einem ersten Zeitabschnitt einen ersten Teil eines Synchronisationsdatenpaketes und in einem zweiten Zeitabschnitt einen zweiten Teil eines Synchronisationsdatenpaketes empfangen kann.

8. Verfahren zur Übertragung von Datenpaketen nach Anspruch 7,
**dadurch gekennzeichnet,**
**dass** im ersten und im zweiten Teil jeweils zumindest ein solcher Abschnitt der Trainingssequenz des Synchronisationsdatenpaketes enthalten ist, der die Bestimmung einer jeweiligen Kanalentzerrung erlaubt.

9. Verfahren zur Übertragung von Datenpaketen nach einem der vorhergehenden Ansprüche,
**dadurch gekennzeichnet,**
**dass** eine erste Mobilstation nicht gleichzeitig Datenpakete aussendet und auf den Empfang von Datenpaketen geschaltet wird, wobei eine zweite Mobilstation in Zeitschlitzen, in denen die erste Mobilstation Datenpakete aussendet, auf den Empfang von Datenpaketen geschaltet wird, und in Zeitschlitzen, in denen die erste Mobilstation auf den Empfang von Datenpaketen geschaltet wird, Datenpakete aussendet.

10. System zur Übertragung von Datenpaketen zwischen zumindest einer Basisstation (1) und zumindest einer Mobilstation (5) eines Mobilfunksystems, wobei die Datenpakete jeweils in aus einer festen Anzahl von Zeitschlitzen bestehenden Zeitrahmen übertragen werden umfassend
eine Mobilstation (5), welche geeignet ist, Datenpakete in mehreren aufeinanderfolgenden Zeitschlitzen zu übertragen, eine aktuelle Basisstation (1), mit welcher die Mobilstation (5) in Verbindung steht, und
eine Sendeeinheit (3) der aktuellen Basisstation (1), welche geeignet ist, während vorgegebener Zeitrahmen Steuerdatenpakete oder keine Datenpakete an die Mobilstation (5) zu senden,
**dadurch gekennzeichnet,**
**dass** eine Empfangseinheit (6) der Mobilstation derart ausgestaltet ist, daβ sie jeweils während eines Zeitabschnittes, der länger als ein vorgegebener Zeitrahmen ist, Synchronisationsdatenpakete von benachbarten Basisstationen (9) empfangen und/oder Signalpegel von benachbarten Basisstationen (9) messen kann.

11. System zur Übertragung von Datenpaketen nach Anspruch 10,
**dadurch gekennzeichnet,**
**dass** die Empfangseinheit (6) der Mobilstation (5) geeignet ist, während des vorgegebenen Zeitabschnittes auf den Empfang von Synchronisationsdatenpaketen und/oder die Messung von Signalpegeln von benachbarten Basisstationen (9) zu schalten.

12. System zur Übertragung von Datenpaketen nach Anspruch 10 oder 11,
**dadurch gekennzeichnet,**
**dass** die Empfangseinheit (6) der Mobilstation (5) geeignet ist, das von der Sendeeinheit (3) der aktuellen Basisstation (1) jeweils unmittelbar vor und/oder nach einem vorgegebenen Zeitrahmen ausgesendete Datenpaket zumindest teilweise nicht zu empfangen.

13. System zur Übertragung von Datenpaketen nach Anspruch 12,
**dadurch gekennzeichnet,**
**dass** die Mobilstation (5) eine Verarbeitungseinheit aufweist, welche geeignet ist, die zumindest teilweise nicht empfangenen Datenpakete mittels der redundanten Codierung anderer empfangener Datenpakete zu rekonstruieren.

14. System zur Übertragung von Datenpaketen nach einem der Ansprüche 10 bis 13,
**dadurch gekennzeichnet,**
**dass** die Sendeeinheit (3) der aktuellen Basisstation (1) geeignet ist, das unmittelbar vor bzw. nach dem vorgegebenen Zeitrahmen ausgesendete Datenpaket am Ende bzw. am Anfang des vorgegebenen Zeitrahmens noch einmal auszusenden.

15. System zur Übertragung von Datenpaketen nach einem der Ansprüche 10 bis 14 "
**dadurch gekennzeichnet,**
**dass** die Sendeeinheit (3) der aktuellen Basisstation (1) geeignet ist, das unmittelbar vor bzw. nach dem vorgegebenen Zeitrahmen ausgesendete Datenpaket während dem vorgegebenen Zeitrahmen noch einmal auszusenden und die Empfangseinheit (6) der Mobilstation (5) geeignet ist, dieses Datenpaket zu empfangen.

## Claims

1. A method for transmitting data packets between at least one base station and at least one mobile station of a mobile radio system, wherein
the data packets are transmitted in each case in time frames which consist of a fixed number of time slots, and the mobile station can transmit data packets in a plurality of successive time slots,
in which, while the mobile station is connected to a current base station, the current base station sends control data packets or no data packets to the mobile station during predetermined time frames,
**characterised in that**
a time segment which is longer than a predetermined time frame is available to the mobile station in each case for receiving synchronisation data packets and/or for measuring signal levels from adjacent base stations.

2. The method for transmitting data packets as claimed in Claim 1,
**characterised in that**
during the time segment, which is longer than the predetermined time frame, the mobile station is switched to the reception of synchronisation data packets and/or the measurement of signal levels from adjacent base stations.

3. The method for transmitting data packets as claimed in Claim 1 or 2,
**characterised in that**
the data packet which is sent out by the current base station in each case immediately before and/or after a predetermined time frame is at least partially not received by the mobile station.

4. The method for transmitting data packets as claimed in Claim 3,
**characterised in that**
the data packets which are at least partially not received are reconstructed by the mobile station by means of the redundant encoding of other received data packets.

5. The method for transmitting data packets as claimed in one of the preceding claims,
**characterised in that**
the data packet which is sent out by the current base station immediately before or after the predetermined time frame is sent out again at the end or at the beginning of the predetermined time frame.

6. The method for transmitting data packets as claimed in one of the Claims 1-4,
**characterised in that**
the data packet which is sent out by the current base station immediately before or after the predetermined time frame is sent out again during the predetermined time frame and received by the mobile station in this case.

7. The method for transmitting data packets as claimed in one of the preceding claims,
**characterised in that**
the length of the time segment during which the mobile station is switched to the reception of synchronisation data packets from adjacent base stations is selected in such a way that the mobile station can receive a first part of a synchronisation data packet in a first time segment and a second part of a synchronisation data packet in a second time segment.

8. The method for transmitting data packets as claimed in Claim 7,
**characterised in that**
at least one such segment of the training sequence of the synchronisation data packet is contained in the first and second part in each case, thereby allowing the specification of a relevant channel equalisation.

9. The method for transmitting data packets as claimed in one of the preceding claims,
**characterised in that**
a first mobile station does not send data packets concurrently and is switched to the reception of data packets, wherein a second mobile station is switched to the reception of data packets in time slots in which the first mobile station sends out data packets, and sends out data packets in time slots in which the first mobile station is switched to the reception of data packets.

10. A system for transmitting data packets between at least one base station (1) and at least one mobile station (5) of a mobile radio system, wherein the data packets are transmitted in each case in time frames which consist of a fixed number of time slots, comprising
a mobile station (5) which is suitable for transmitting data packets in a plurality of successive time slots,
a current base station (1) to which the mobile station (5) is connected, and
a send unit (3) of the current base station (1), which send unit is suitable for sending control data packets or no data packets to the mobile station (5) during predetermined time frames,
**characterised in that**
a receive unit (6) of the mobile station is designed in such a way that it can receive synchronisation data packets from adjacent base stations (9) and/or measure signal levels from adjacent base stations (9) in each case during a time segment which is longer than a predetermined time frame.

11. The system for transmitting data packets as claimed in Claim 10,
**characterised in that**
the receive unit (6) of the mobile station (5) is suitable for switching to the reception of synchronisation data packets and/or the measurement of signal levels from adjacent base stations (9) during the predetermined time segment.

12. The system for transmitting data packets as claimed in Claim 10 or 11,
**characterised in that**
the receive unit (6) of the mobile station (5) is suitable for at least partially not receiving the data packet which is sent out by the send unit (3) of the current base station (1) in each case immediately before and/or after a predetermined time frame.

13. The system for transmitting data packets as claimed in Claim 12,
**characterised in that**
the mobile station (5) has a processing unit which is suitable for reconstructing the data packets, which are at least partially not received, by means of the redundant encoding of other received data packets.

14. The system for transmitting data packets as claimed in one of the claims 10 to 13,
**characterised in that**
the send unit (3) of the current base station (1) is suitable for again sending out, at the end or at the beginning of the predetermined time frame, the data packet which was sent out immediately before or after the predetermined time frame.

15. The system for transmitting data packets as claimed in one of the Claims 10 to 14,
**characterised in that**
the send unit (3) of the current base station (1) is suitable for again sending out, during the predetermined time frame, the data packet which was sent out immediately before or after the predetermined time frame, and that the receive unit (6) of the mobile station (5) is suitable for receiving this data packet.

## Revendications

1. Procédé de transmission de paquets de données entre au moins une station de base et au moins une station mobile d'un système radio mobile,
les paquets de données étant respectivement transmis dans des trames temporelles composées d'un nombre fixe de créneaux temporels et la station mobile pouvant transmettre des paquets de données dans plusieurs créneaux temporels successifs,
dans lequel, pendant que la station mobile se trouve connectée à une station de base actuelle, la station de base actuelle envoie des paquets de données de commande ou n'envoie pas de paquets de données à la station mobile pendant des trames temporelles préféfinies,
**caractérisé en ce que** se trouve à la disposition de la station mobile respectivement une tranche de temps qui est plus longue qu'une trame temporelle prédéfinie pour recevoir des paquets de données de synchronisation et/ou mesurer des niveaux de signaux de stations de base voisines.

2. Procédé de transmission de paquets de données selon la revendication 1, **caractérisé en ce que**, pendant la tranche de temps qui est plus longue que la trame temporelle prédéfinie, la station mobile est commutée sur la réception de paquets de données de synchronisation et/ou la mesure de niveaux de signaux de stations de base voisines.

3. Procédé de transmission de paquets de données selon la revendication 1 ou 2, **caractérisé en ce que** le paquet de données émis par la station de base actuelle respectivement directement avant et/ou après une trame temporelle prédéfinie n'est pas reçu, au moins en partie, par la station mobile.

4. Procédé de transmission de paquets de données selon la revendication 3, **caractérisé en ce que** les paquets de données qui n'ont pas été reçus, au moins en partie, sont reconstruits par la station mobile au moyen du codage redondant d'autres paquets de données reçus.

5. Procédé de transmission de paquets de données selon l'une des revendications précédentes, **caractérisé en ce que** le paquet de données émis par la station de base actuelle directement avant resp. après la trame temporelle prédéfinie est émis encore une fois à la fin resp. au début de la trame temporelle prédéfinie.

6. Procédé de transmission de paquets de données selon l'une des revendications 1 à 4, **caractérisé en ce que** le paquet de données émis par la station de base actuelle directement avant resp. après la trame temporelle prédéfinie est émis encore une fois pendant la trame temporelle prédéfinie et est reçu, dans ce cas, par la station mobile.

7. Procédé de transmission de paquets de données selon l'une des revendications précédentes, **caractérisé en ce que** la longueur de la tranche de temps pendant laquelle la station mobile est commutée sur la réception de paquets de données de synchronisation de stations de base voisines est choisie de manière telle que la station mobile peut recevoir une première partie d'un paquet de données de synchronisation dans une première tranche de temps et une deuxième partie d'un paquet de données de synchronisation dans une deuxième tranche de temps.

8. Procédé de transmission de paquets de données selon la revendication 7, **caractérisé en ce qu'**est contenue, dans les première et deuxième parties, respectivement au moins une section de la séquence d'apprentissage du paquet de donnés de synchronisation qui permet la détermination d'une égalisation de canal respective.

9. Procédé de transmission de paquets de données selon l'une des revendications précédentes, **caractérisé en ce qu'**une première station mobile n'émet pas de paquets de données en étant en même temps commutée sur la réception de paquets de données, une deuxième station mobile étant commutée sur la réception de paquets de données dans des créneaux temporels
dans lesquels la première station mobile émet des paquets de données, et émettant des paquets de données dans des créneaux temporels dans lesquels la première station mobile est commutée sur la réception de paquets de données.

10. Système de transmission de paquets de données entre au moins une station de base (1) et au moins une station mobile (5) d'un système radio mobile, les paquets de données étant transmis respectivement dans des trames temporelles composées d'un nombre fixe de créneaux temporels, comprenant
une station mobile (5) qui est capable de transmettre des paquets de données dans plusieurs créneaux temporels successifs,
une station de base actuelle (1) à laquelle la station mobile (5) est connectée et
une unité émettrice (3) de la station de base actuelle (1), laquelle est capable d'envoyer des paquets de données de commande ou de ne pas envoyer de paquets de données à la station mobile (5) pendant des trames temporelles prédéfinies,
**caractérisé en ce que**
une unité réceptrice (6) de la station mobile est aménagée de manière telle qu'elle peut recevoir des paquets de données de synchronisation de stations de base voisines (9) respectivement pendant une tranche de temps qui est plus longue qu'une trame temporelle prédéfinie et/ou mesurer des niveaux de signaux de stations de base voisines (9).

11. Système de transmission de paquets de données selon la revendication 10, **caractérisé en ce que** l'unité réceptrice (6) de la station mobile (5) est capable de commuter, pendant la tranche de temps prédéfinie, sur la réception de paquets de données de synchronisation et/ou la mesure de niveaux de signaux de stations de base voisines (9).

12. Système de transmission de paquets de données selon la revendication 10 ou 11, **caractérisé en ce que** l'unité réceptrice (6) de la station mobile (5) est capable de ne pas recevoir, au moins en partie, le paquet de données émis par l'unité émettrice (3) de la station de base actuelle (1) respectivement directement avant et/ou après une trame temporelle prédéfinie.

13. Système de transmission de paquets de données selon la revendication 12, **caractérisé en ce que** la station mobile (5) comporte une unité de traitement qui est capable de reconstruire les paquets de données, non reçus au moins en partie, au moyen du codage redondant d'autres paquets de données reçus.

14. Système de transmission de paquets de données selon l'une des revendications 10 à 13, **caractérisé en ce que** l'unité émettrice (3) de la station de base actuelle (1) est capable d'émettre encore une fois, à la fin resp. au début de la trame temporelle prédéfinie, le paquet de données émis directement avant resp. après la trame temporelle prédéfinie.

15. Système de transmission de paquets de données selon l'une des revendications 10 à 14, **caractérisé en ce que** l'unité émettrice (3) de la station de base actuelle (1) est capable d'émettre encore une fois, pendant la trame temporelle prédéfinie, le paquet de données émis directement avant resp. après la trame temporelle prédéfinie et l'unité réceptrice (6) de la station mobile (5) est capable de recevoir ce paquet de données.
